(19) Europäisches Patentamt
European Patent Office
Office européen des brevets

(11) **EP 4 040 397 A1**

(12) **EUROPEAN PATENT APPLICATION**

(43) Date of publication:
**10.08.2022 Bulletin 2022/32**

(21) Application number: **21155801.0**

(22) Date of filing: **08.02.2021**

(51) International Patent Classification (IPC):
**G06T 17/00** (2006.01)    **G06T 15/04** (2011.01)
**G06T 15/50** (2011.01)

(52) Cooperative Patent Classification (CPC):
**G06T 17/00; G06T 15/04; G06T 15/506**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Reactive Reality AG**
**8010 Graz (AT)**

(72) Inventors:
• **GOSCH, Philipp**
**8020 Graz (AT)**

• **HUTTER, Patrik**
**8152 Stallhofen (AT)**
• **GRASMUG, Philipp**
**8010 Graz (AT)**
• **HAUSWEISNER, Stefan**
**8182 Puch bei Weiz (AT)**

(74) Representative: **Epping - Hermann - Fischer**
**Patentanwaltsgesellschaft mbH**
**Schloßschmidstraße 5**
**80639 München (DE)**

(54) **METHOD AND COMPUTER PROGRAM PRODUCT FOR PRODUCING A 3D REPRESENTATION OF AN OBJECT**

(57)    A method for producing a 3D representation of an object comprises storing a polygonal 3D mesh having a plurality of faces, and a plurality of keyframes, each keyframe comprising an image registered on the mesh with a view- and projection-matrix. A plurality of surface points on the plurality of faces are selected. For each selected surface point, hemisphere keyframe samples are determined by determining a color information and a direction information from each keyframe being visible from said selected surface point. A hemisphere grid table is determined based on the hemisphere keyframe samples, and a spherical harmonics coefficient set is determined based on the hemisphere grid table. An SH texture is generated based on the SH coefficient sets for each selected surface point.

**Fig 3**

**Description**

The present disclosure relates to a computer implemented method and to a computer program product for producing a 3-dimensional, 3D, representation of an object.

Image based rendering is a group of rendering techniques with the goal to generate a 3D model based on a set of 2-dimensional, 2D, images and enable rendering of novel views of a shown scene.

Various techniques are known in this field that take a set of input images, either taken as single images from different viewing perspectives or from a video sequence showing the object from different views. These input images are processed to generate a 3D mesh that defines the structure of an object, and a texture defining a color information that is mapped to the mesh.

In conventional approaches the texture maps a distinct color information to each point on a surface of the 3D mesh. However, this does not represent an actual color impression in the real world where colors on an object may look different from different perspectives.

An object to be achieved is to provide an improved processing concept that allows the generation of a 3D representation of an object with a more realistic color impression.

This object is achieved with the subject-matter of the independent claims. Embodiments and developments derive from the dependent claims.

The improved processing concept is based on the insight that color information on the surface of a 3D model of an object can be represented with surface light fields being functions which assign a color to each ray originating on a surface. This means that a surface light field encodes all the colors for every possible viewing direction of every surface point. However, being aware that such surface light fields have a large performance impact and have a high memory requirement to represent such light fields, the improved processing concept provides various approaches to reduce the actual effort of surface light fields by various encoding and/or compressing schemes.

The improved processing concept is based inter alia on the idea that a surface light field can be encoded, respectively compressed, using spherical harmonics to represent the surface light field.

As mentioned above, the memory requirements for the surface light field are usually large, due to the fact that for every surface point (or Texel of a 3D mesh representation in most common cases) a color for every possible viewing direction has to be saved. By disregarding participating media and thus viewing directions (or rays) coming from inside the model, the possible viewing directions can be represented as a hemisphere oriented along the surface normal of a surface point. Thus a hemispherical color texture, e.g. RGB, with or without an alpha channel, can be used to represent colors corresponding to viewing directions per surface point.

In the approach according to the improved processing concept it is proposed to encode and represent those hemispherical textures as spherical harmonics. Spherical Harmonics are special functions defined on the surface of a sphere. Similar to how Fourier decomposition works, a function on the surface of a sphere can be represented by the sum of spherical harmonics functions of varying order. Depending on the variance of the original function only lower order spherical harmonics might be needed.

The inventors have found that e.g. the appearance of humans and garments tends to consist of diffuse/matte surfaces, which spherical harmonics can encode particularly well. This effectively brings down the memory requirements from a hemispherical image texture representation to a few coefficients. These coefficients can be scalar values, an amount of which is dependent on the highest chosen spherical harmonics order.

The improved processing concept proposes a process to encode the colors per viewing direction per surface point using spherical harmonics into a special spherical harmonics texture and utilizing this texture during rendering of the surface light field. This makes it possible to substantially bring down memory footprint and increase performance for the purpose of surface light field rendering on mobile devices and with augmented or virtual reality.

This technique can be further improved memory-wise by employing a combination of various compression methods on the spherical harmonics texture, as will be described below.

For example, a computer implemented method for producing a three-dimensional representation of an object according to the improved processing concept comprises storing, e.g. in a computer system, a polygonal 3D mesh having a plurality of faces, and a plurality of keyframes, each keyframe comprising an image registered on the mesh with a view- and projection-matrix. For example, the keyframes, respectively the images of the keyframes, are images taken from various viewing angles around the object represented by the 3D mesh. The respective view- and projection-matrixes for example define a camera position and viewing angle from which the image has been recorded and may further define how image pixels of the image, e.g. in UV space, are mapped onto the mesh, e.g. in 3D space.

A plurality of surface points are selected in the computer system on the plurality of faces. For each selected surface point in the computer system, the following steps are performed: Hemisphere keyframe samples are determined by determining a color information and a direction information from each keyframe being visible from said selected surface point. For example, the direction information indicates a direction in 3D space from the selected surface point to the keyframe, respectively the keyframe's camera position. The color information, for example, is retrieved from the keyframe image at an image coordinate that may be determined via the associated view- and projection-matrix of said keyframe. In this context "visible" means, for example, that there is a direct line of sight between the surface point and the keyframe. For example, if a keyframe is obstructed by other parts of the object or is, relative to the surface point, in the back of the object, such a keyframe would not be visible from that surface point.

Based on the hemisphere keyframe samples a hemisphere grid table is determined, in particular for each selected surface point. For example, such a grid table defines certain viewing directions for the surface point with a respective color information based on the hemisphere grid table. A spherical harmonics, SH, coefficient set is determined. For example, the color information stored in the grid table is encoded with a spherical harmonics function of a given order.

Furthermore, in the computer system, a SH texture is generated based on the SH coefficient sets for each selected surface point such that each selected surface point is associated to one of the SH coefficient sets. Accordingly, for each selected surface point there is a SH coefficient set available in the SH texture that represents the direction-dependent color information.

For example, for each keyframe the associated view- and projection-matrix defines a transformation of a 3D point, in particular on the mesh, into 2D coordinates in the image of said keyframe.

For rendering a surface light field using the mesh with the associated SH texture, a fragment shader just needs to retrieve the SH coefficients from the SH texture for the current fragment, respectively surface point, and viewing direction and sum the contributions for the order depth of the SH texture specified and overall color channels to get the final fragment color, respectively the color of the surface point. In some implementations there may be only a single color channel, but it is also possible to have separate color channels for, for example, red, green, blue and optionally an alpha channel.

In the step of selecting the surface points several selection criteria can be applied, for example also in an iterative fashion. Accordingly, in some embodiments in the step of selecting a plurality of surface points, such surface points are selected that fulfil at least one of the following conditions:

- the surface point is located on a face of the plurality of faces, all vertices of which face being visible from at least one of the keyframes;
- the surface point is located on an enlarged version of a face of the plurality of faces, all vertices of which enlarged version being visible from at least one of the keyframes;
- the surface point is located on a face of the plurality of faces, at least one of the vertices of which face being visible from at least one of the keyframes.

If the surface points are selected in an iterative fashion, it may be started with the surface points being on faces with all vertices being visible, then continued with surface points being on the enlarged versions of the faces and further continued with such surface points that have not been selected before but have at least one of the vertices being visible.

By encoding the hemisphere grid tables with the SH coefficient sets a substantial reduction of memory consumption can be achieved. However, in some embodiments further compression can be performed. For example, at least one SH coefficient set from the SH texture is eliminated in the computer system based on a similarity measure between the at least one SH coefficient set and at least one further SH coefficient set from the SH texture. Furthermore, each surface point, which has been associated to the eliminated SH coefficient set, is re-associated to the at least one further SH coefficient set. Hence, if two SH coefficient sets are similar according to a given criterion, it may be sufficient to associate the two respectively associated surface points to only one of the two SH coefficient sets to save further memory. This process can also be called merging.

This may be supported by, in the step of eliminating, ordering the SH coefficient sets in the SH texture, for example according to a lexicographical order of the SH coefficient sets, and determining the similarity measure between consecutive SH coefficient sets of the ordered SH texture. For example, the ordering already ensures that similar SH coefficient sets are located next to each other in the SH texture. Hence, it is easier to find such an SH coefficient set that fulfills a similarity measure criterion.

For example, the similarity measure is determined as a sum of squared differences between coefficients of the SH coefficient sets. The at least one SH coefficient set is then eliminated if the similarity measure is smaller than a predetermined threshold.

Another possibility to improve the compression ratio through merging similar hemispheres is to make them rotation invariant. This is based on the idea that if two samples of the same material with the same orientation of the normal but at different positions on the mesh geometry are taken, the SH coefficients will look the same or similar up to a rotation around the respective surface normal. By normalizing the orientation of the SH coefficient sets and storing this rotation factor explicitly, more similar SH coefficient sets can be merged. For example, generating the SH texture comprises determining and storing a rotation factor around the surface normal of the SH coefficient sets, and normalizing an orientation of the SH coefficient sets based on the respective determined rotation factors. The similarity measure is determined based on the normalized SH coefficient sets.

Optionally, this step can further enhance compression by checking the coefficient values and dropping higher order coefficients in the SH coefficient sets if their contribution is negligible, for example on hemispheres which mainly contain low frequency data, e.g. corresponding to low color variations or smooth only color variation.

The predetermined threshold should be carefully tuned to have a good trade-off between compression and visual quality.

As described above, keyframe samples are only determined for selected surface points from keyframes being visible from said surface point. Such a visibility check can be performed on the fly, for example for each surface point keyframe combination. However, in various implementations a visibility matrix can be determined, in particular before the selecting step, based on the plurality of keyframes and the associated view- and projection-matrices. The visibility matrix indicates, for each of the keyframes, whether vertices of the plurality of faces are visible from said keyframe. Hence, any determination of a visibility between one of the surface points and one of the keyframes can be based on the visibility matrix. For example, every input vertex of the mesh is checked with every keyframe by using the respective keyframe view- and projection-matrices to transform the vertex into keyframe space and by checking if it is outside the view, visible or hidden behind another polygon of the mesh. This can, for example, be done by carrying out a raycast from the keyframe to a vertex and checking if an intersection with the respective polygon is smaller than an expected distance.

In some implementations, determining the hemisphere grid table comprises storing the color information of the hemisphere keyframe samples in the hemisphere grid table at table positions that are based on the respective direction information, and applying a filling algorithm to table positions that are empty based on the stored color information. For example, in the case that only a limited number of keyframes is visible for a selected surface point, it can be assumed that not all table positions will be used for storing the respective color information. Hence, using a filling algorithm and assuming that the color information changes smoothly over various directions, the empty table positions, i.e. those positions to which no color information has been stored, can be filled based on the stored color information. For example, the filling algorithm can be based on some kind of interpolation, for example if directions in between stored color information are to be found, or extrapolation if, for example, stored information is only available at one side, or a Delaunay triangulation.

In some configurations it can occur that no SH coefficient set can be determined for some surface points, e.g. because no keyframe is visible from such a surface point. However, an SH coefficient set can be determined from the surroundings on the mesh. For example, in some implementations additional surface points on the plurality of faces are selected. For each additional surface point, a respective SH coefficient set is generated by interpolating between SH coefficient sets associated with surface points neighboring to said additional surface points on the mesh.

Such a procedure can be performed in several iterations, e.g. three to four iterations. The interpolation may happen in two faces, in particular per iteration: first all the empty and all the filled Texel or surface points are found, including their sample coordinates. Interpolation of the SH coefficient sets is then done by coefficient interpolation for all empty surface points, i.e. the additional surface points.

In the various implementations of the method, the color information may be processed according to one of several available color spaces. Such color spaces are, for example, RGB, RGB with an alpha channel, HSV, CIELAB, or any color space that has a separate channel for luminous intensity, to name only a few. For example, by using a color space that has a separate channel for luminous intensity like HSV or CIELAB, the fact that humans are less sensitive to intensity than to color or saturation can be utilized. For example, this can be leveraged by using a larger threshold when SH texture coefficients are compared regarding their similarity measure.

It has been found that the SH coefficient sets and the SH texture can be compressed efficiently using a Principal Component Analysis, PCA. Hence, in various implementations the method further comprises compressing the SH texture by performing a PCA on the SH texture. Accordingly, a smaller memory footprint for the 3D representation of the object can be achieved.

In some practical situations, it can happen that wrong keyframe samples are considered for a surface point due to an imperfect alignment between the mesh geometry and the keyframes. In particular, this may have an impact if the respective keyframe sample is close, for example, to the silhouette of the object in the respective keyframe image. In such a case it can happen that a keyframe sample that is actually background is wrongly taken into account for a color information of a surface point on the mesh. To avoid this, a simple approach may be implemented by projecting the mesh geometry into the keyframe.

Accordingly, in some implementations the method may further comprise, e.g. before selecting the surface points, projecting the mesh onto at least one, more or even all of the keyframes for generating a respective binary mask for said keyframe. Each binary mask is eroded by a predefined eroding threshold for generating a silhouette mask. Hence, a possible inaccuracy between keyframes and the mesh geometry can be taken into account. The binary mask may be defined with black pixels for the background and white pixels for the geometry, or vice versa.

For example, no keyframe sample is determined for a selected surface point from a keyframe, if a projection of said selected surface point onto said keyframe is outside the silhouette mask. For example, if the projected surface point falls on a geometry pixel of the mask, the sample is considered, otherwise it is ignored.

According to one embodiment of the improved processing concept, a computer program product for producing a 3D representation of an object comprises a non-transitory computer-readable storage medium and computer program instructions stored therein, enabling a computer system to execute a method according to one of the implementations described above.

Furthermore, a computer system may have a processor and a storage medium having computer program instructions stored therein, enabling the processor to execute a method according to one of the implementations described above.

The improved processing concept will be explained in more detail in the following with the aid of the drawings. Elements and functional blocks having the same or similar function bear the same reference numerals throughout the drawings. Hence their description is not necessarily repeated in following drawings.

In the drawings:

Figure 1      shows example camera configurations;

Figure 2      shows a detail of an example polygonal 3-dimensional mesh;

Figure 3      shows an example block diagram of a method for producing a 3D representation of an object according to the improved processing concept;

Figure 4      shows an example of a face of the 3-dimensional mesh;

Figure 5      shows an example representation of a hemisphere of a surface point; and

Figure 6      shows an example system for producing a 3D representation of an object according to the improved processing concept.

The present disclosure provides a novel and improved processing concept for generating a 3D model, respectively a 3D representation, of an object based on a set of 2D images that allows rendering of novel views of the object.

To this end, a set of images is produced that show the object, so to say, from all sides. The object is turned in front of a camera, or vice versa, and moved to different elevations to capture as many viewing angles as possible.

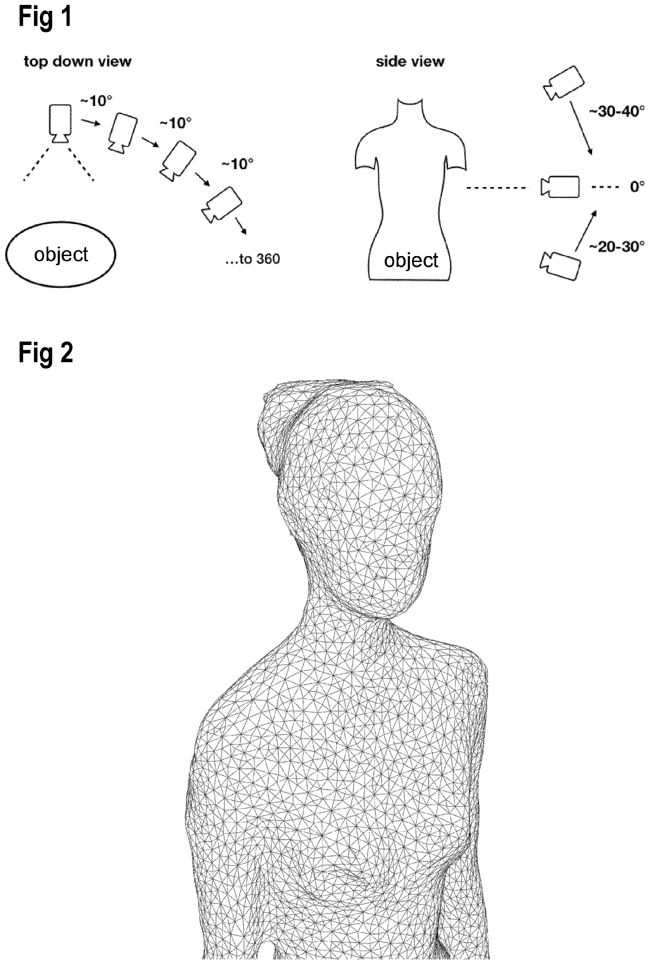

Figure 1 shows example implementations of such a process with a top-down view of the object on the left side and a side view of the object on the right side of Figure 1. The example differential angle of about 10° in the top-down view is only used as an example and could also be higher or lower depending on the complexity of the object. Similarly, also the viewing angles denoted on the right side for the side view of the object are only taken as examples. This for example can be implemented with a turntable, on which the object is placed for achieving the different viewing angles. Alternatively, the camera can be moved around the object. For example, the object is a garment dressed on a mannequin.

A 3D reconstruction technique can be used to generate a polygonal 3D mesh of the object. The 3D reconstruction usually operates by image feature matching and needs to be able to correctly identify and distinguish images features in several images as well as possible. To enable this, the rendered images are preferably in a lossless image format like PNG, with a resolution that is a) high enough to reflect to all geometric and texture details that are present in the CAD model and b) high enough to avoid visible pixel borders and aliasing. At the same time, the resolution should not be higher to avoid unnecessary computational complexity. This for example can be achieved with a resolution of at least 6 megapixels.

Photo capturing can be achieved by a human operator or can be automated by a machine consisting of an electric turntable, one or more cameras, flashes and a control unit, e.g. a computer. Capturing may be performed with a standard DSLR camera or smartphone camera.

The 3D reconstruction is preferably fully automated. The input is one or more set of images and optional metadata. The output is a 3D mesh, consisting of geometric information like vertices, faces, normals etc., e.g. in the form of 3D surface points.

3D reconstruction can be based on conventional photogrammetry methods like (simultaneous) localization and mapping, SLAM, structure-from-motion, SFM or the like. These approaches find and identify common parts in the image set/sets by matching so-called image features. Image features are distinctive points or patches in an image, for example a specific color gradient or pattern. By matching these features and triangulating corresponding 3D points, a 3D surface hypothesis is reconstructed. It is possible to use optimization methods that enforce a certain smoothness of the surface to improve the result

Figure 2 shows an example detail of a polygonal 3D mesh being the output of the 3D reconstruction. The mesh contains polygons defined by vertices and forming faces of the mesh. The polygons respectively faces in this example have a triangular shape. During 3D reconstruction some or all of the input images of the image set are registered on the mesh with a view- and projection-matrix. Such images, together with their associated view- and projection-matrix, will be called keyframes in the following. For example, the associated view- and projection-matrix defines a transformation of the 3D point, in particular on the mesh, into 2D coordinates in the image of the keyframe.

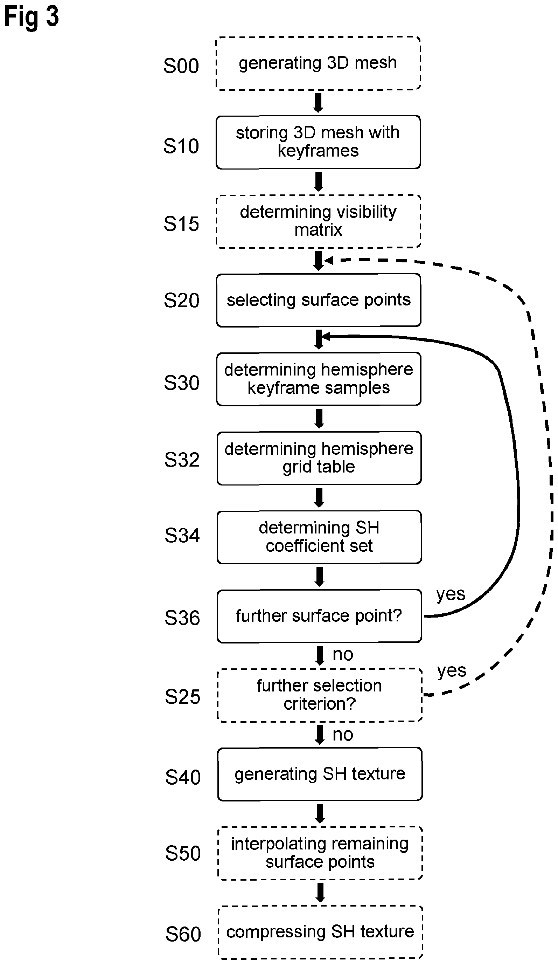

Referring now to Figure 3, an example flow diagram for a method for producing a 3D representation of an object according to the improved processing concept is shown.

In step S00 an optional 3D mesh generation is performed, as described above in conjunction with Figure 1 and Figure 2.

Although the 3D mesh generation of step S00 can be performed outside the method according to the improved processing concept, its result, i.e. the 3D mesh with keyframes, is stored for example in a computer system in step S10 as a basis for the following procedure. As described above, each keyframe comprises an image registered on the mesh with a view- and projection-matrix. For example, around 100 keyframes may be available and sufficient for the following procedure.

In the optional step S15, a visibility matrix is computed indicating, for each of the keyframes, whether vertices of the plurality of faces are visible from said keyframe. For example, every input vertex is checked with every keyframe by using the associated view- and projection-matrices of the keyframes to transform the vertex or surface point into keyframe space and checking if it is outside the view, visible or hidden behind another polygon. This can be done, for example, by performing a raycast from the keyframe to the vertex and checking if an intersection with the polygon, e.g. a triangle, is smaller than an expected distance. For example, 5 to 10 keyframes may be visible for each vertex, in average.

In step S20 a plurality of surface points on the plurality of faces are selected.

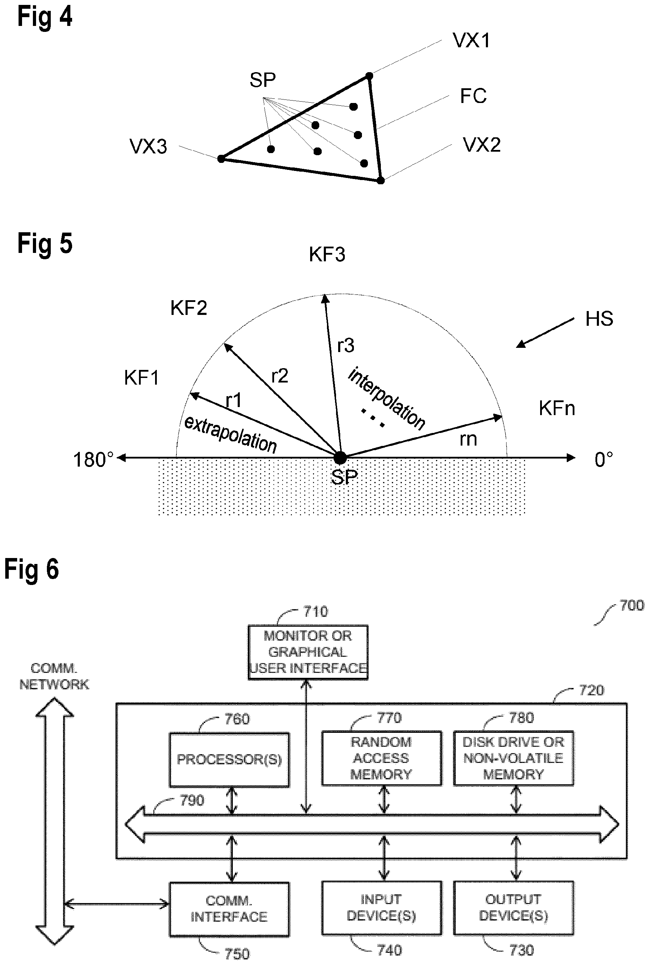

Referring now to Figure 4, a schematic representation of a face FC as part of the mesh is shown, like that shown in Figure 2. The face FC in this example has a triangular shape defined by vertices VX1, VX2 and VX3. Several surface points SP are defined on the face, sharing for example the same surface normal of the face. Also the vertices VX1, VX2, VX3 can be used as surface points to be selected and processed as described in conjunction with step S20 and the subsequent steps in the following.

Hence, referring back to step S20 of Figure 3, all or at least all relevant surface points can be selected in a single step, but the selection can also be performed in iterations with different selection criteria in each iteration step. However, this will be explained in more detail below in conjunction with step S25.

In the following, steps S30, S32 and S34 are performed iteratively for each of the selected surface points. In step S36 it is checked whether all of the selected surface points have been processed and, if not, it is continued at step S30 for the next surface point.

In step S30 for one of the selected surface points, hemisphere keyframe samples are determined by determining a color information and a direction information from each keyframe visible from that selected surface point.

For example, either on a GPU or a CPU, the colors per direction of the surface point are computed. This computation is run once for every combination of surface point and keyframe. First, it is checked if the face or the triangle the current point is on is visible for the keyframe by looking up the visibility of the vertices of the face in the visibility matrix, if available, or by computing the visibility on the fly. Then it may transform the surface point to a normalized keyframe view space and checks again if it is visible. If this is fulfilled, the point position is transformed from normalized image coordinates to keyframe image coordinates. These keyframe image coordinates are used to fetch an interpolated color information from the image of the keyframe. During that operation also a direction from the surface point to the keyframe is determined together with the color information, in particular from the view and direction matrix associated with the keyframe.

In step S32 a hemisphere grid table is determined based on the hemisphere keyframe samples determined in step S30.

Referring now to Figure 5, an example representation of a hemisphere HS shown, however for better understanding only in a 2D view. The surface point SP is the center of the hemisphere HS. Various keyframes KF1, KF2, KF3, ..., KFn are arranged somewhere around the surface point, such that each keyframe in this example can be assigned a direction or ray from the surface point SP. Accordingly, ray r1 points to keyframe KF1, ray r2 points to keyframe KF2, etc. for rays r3,..., rn.

Referring back to the explanations of step S32 in Figure 3, each direction or ray can be mapped to a table position in the hemisphere grid table, as detailed in the following.

For example, a grid is created with a given or choosable resolution. Each surface point can be assigned a surface normal depending on the face of the mesh that the surface point is on. Such a surface normal defines a hemisphere of that surface point. A hemisphere direction can be retrieved by transforming a current world space direction to a hemisphere space. By mapping the hemisphere direction to a disk a position on the disk can be calculated. Furthermore, by mapping the disk to a square, a square position can be calculated from the position on the disk. Then a grid position can be retrieved by multiplying the normalized square position by the grid size, respectively resolution. Hence, in summary, each direction in 3D space can be transformed to a table position in the grid table. Hence, a color information can be stored at a table position based on the direction information associated with the color information.

Depending on the number of keyframes, respectively images, visible from a surface point, not all table positions may be filled after this process. Hence, a next step may be processing the rays per grid. Such a task may be heavily parallelized by using multithreading on a CPU. For example, it is iterated over every point, respectively table position, of the grid. The current grid position or table position is normalized, and the respective square position of the grid is mapped to a disk position and further to a hemisphere direction.

A ray may be created with this hemisphere direction and the color for the current grid position is looked up from the grid. If the grid is not yet filled but only has a few single color values from the keyframe sampling, all empty positions may be filled with some kind of filling algorithm. For example, this could include a simple grid fill or an enhanced filling algorithm like a Delaunay triangulation on existing sample grid points and/or extrapolation/repeat on edges of the grid. In other words, a filling algorithm can be applied to table positions of the hemisphere grid table that are empty, the filling algorithm being based on the stored color information in the hemisphere grid table.

Referring again to Figure 5, further table positions for a direction, e.g. lying between ray r3 and ray rn, can be interpolated by the respective color information stored for these rays r3, rn. Similarly, a direction between ray r1 and the 180° axis may be assigned a color value by extrapolating from the color information associated with ray r1 and other rays, as described above.

Referring now to step S34 in Figure 3, a SH coefficient set for the hemisphere is created. For example, the grid table, in particular the filled grid table, is used as a basis for computing the SH coefficients for forming the respective SH coefficient set. For example, the total amount of coefficients results from the coefficient count of a given SH order, multiplied by the number of color channels. For example, for a second order SH coefficient set and three color channels, e.g. RGB, this would result in 9 x 3, i.e. 27, coefficients for representing a full hemisphere. Support for an alpha channel can also be added.

As mentioned above, this procedure is repeated for every selected surface point.

If all selected surface points are covered, step S25 checks whether there are further selection criteria not covered so far. For example, in a first selection iteration only surface points on fully visible triangles are selected. In other words, the selected surface points are located on a face of the plurality of faces, the vertices of which are visible from at least one of the keyframes.

In a second selection iteration, surface points are selected that are located on an enlarged version of a face of the plurality of faces, all vertices of this enlarged version being visible from at least one of the keyframes. For example, borders of the faces may be expanded in texel space, for example by a factor of $\sqrt{2}$, in order to cover island border texels in UV space.

A third and potentially final iteration may also cover partially visible faces. For example the selected surface points in this iteration are located on a face of the plurality of faces, at least one of the vertices of this face being visible from at least one of the keyframes.

During the selection iterations, surface points that had being selected previously are preferably not selected again in the following selection step.

Hence, after step S25, and if no further selection criterion is available, a plurality of SH coefficient sets for all of the previously selected surface points are available. These can be combined to an SH texture based on the SH coefficient sets for each selected surface point such that each selected surface point is associated to one of the SH coefficient sets in step S40. For example, each SH coefficient set in the SH texture is assigned an ID such that each selected surface point can be associated with the SH coefficient set via this ID.

Optionally, empty texture elements formed by such IDs and empty hemispheres, i.e. hemispheres without SH coefficients, may be removed. Furthermore, duplicated or orphaned hemispheres and IDs in the SH texture may be removed. Such a texture cleanup can also be performed after step S25 and before continuing with a next selection criterion.

In step S50 remaining surface points that, for example, have not been selected so far, can be interpolated such that they also have an associated SH coefficient set. For example, additional surface points can be selected on the plurality of faces, e.g. such surface points that have not been selected before. For each additional surface point, a respective SH coefficient set can be generated by interpolating between SH coefficient sets associated with surface points neighboring to said additional surface points on the mesh.

Step S50 can also be called a face filling step or, if the faces have a triangular shape, triangle filling step. The whole face filling algorithm may be run in iterations, for example in three to four iterations. For example, this is intended to fill the, up to this point, empty texels or surface points that for some reason did not have valid hemispheres, for example due to not being visible to any keyframe. For those texels or surface points a hemisphere is constructed based on the valid neighboring hemispheres, e.g. by interpolating.

This may happen in two phases per iteration. First, all the empty surface points and all the filled surface points are found, including their sample coordinates. Then an interpolation of the SH coefficients can be done by coefficient interpolation for all empty surface points.

In optional step S60 the SH texture is compressed to further reduce its memory consumption.

This can, for example, be done by reducing the hemisphere collection size by merging similar SH coefficient sets. This merging may be performed, for example, by eliminating at least one SH coefficient set from the SH texture based on a similarity measure between the at least one SH coefficient set and at least one further SH coefficient set. Then each surface point that has been associated to the eliminated SH coefficient set can be re-associated to the at least one further SH coefficient set.

Such merging can be achieved by taking advantage of a property of spherical harmonics, namely the ability for lexographical ordering, such that all SH coefficient sets are sorted in the SH texture according to this lexographical ordering. In other words, the ordering orders already similar SH coefficient sets next to each other. Then by computing a difference value of each SH coefficient set with a consecutive one in the SH texture and merging the SH coefficient sets if the value is below a certain threshold, a smaller memory consumption can be achieved.

One advantage of this lexographical ordering approach is that similar SH coefficient sets can be merged across the whole mesh, compared to only with neighboring hemispheres on the mesh which would be the case with, for example, a spatial ordering in a default UV space in an SH texture.

If a single SH texture is created from multiple objects it is even possible to apply such hemisphere merging compression across these objects. A difference value of two SH coefficient sets can be computed, e.g. as a sum of square difference values of the individual coefficient sets.

Optionally this step can further enhance compression by checking the coefficient values in the SH coefficient sets and dropping higher order coefficients if the contribution is negligible, for example, with hemispheres which mainly contain low frequency data. The threshold should be carefully tuned to have a good trade-off between compression and visual quality.

By using a color space that has a separate channel for luminous intensity, like HSV or CIELAB, the fact can be utilized that humans are less sensitive to intensity than to color and saturation. This can be leveraged by using a larger threshold for similarity measures when merging the SH coefficient sets for this luminous intensity channel.

For rendering a surface light field using the 3D mesh geometry with the SH texture the corresponding fragment shader just has to get the coefficients from the SH texture for the current surface point and viewing direction and sum these contributions for the order depths specified and overall channels encoded in the SH texture, e.g. a single channel or red, green, blue and optionally alpha, to get the final color of the surface point.

Fig. 6 is a block diagram of a computer system that may incorporate embodiments according to the improved processing concept. Fig. 6 is merely illustrative of an embodiment incorporating the improved processing concept and does not limit the scope of the invention as recited in the claims. One of ordinary skill in the art would recognize other variations, modifications, and alternatives.

In one embodiment, computer system 700 typically includes a monitor 710, a computer 720, user output devices 730, user input devices 740, communications interface 750, and the like.

As shown in Fig. 6, computer 720 may include a processor(s) 760 that communicates with a number of peripheral devices via a bus subsystem 790. These peripheral devices may include user output devices 730, user input devices 740, communications interface 750, and a storage subsystem, such as random access memory (RAM) 770 and disk drive 780.

User input devices 740 include all possible types of devices and mechanisms for inputting information to computer system 720. These may include a keyboard, a keypad, a touch screen incorporated into the display, audio input devices such as voice recognition systems, microphones, and other types of input devices. In various embodiments, user input devices 740 are typically embodied as a computer mouse, a trackball, a track pad, a joystick, wireless remote, drawing tablet, voice command system, eye tracking system, and the like. User input devices 740 typically allow a user to select objects, icons, text and the like that appear on the monitor 710 via a command such as a click of a button or the like. User input devices 740 may also include color and/or depth cameras, body shape and/or pose tracking sensors, hand tracking devices, head tracking devices or the like. User input devices 740 may particularly include various types of cameras, e.g. a DSLR camera or a camera of a smartphone or the like. Such a camera or smartphone or other mobile device may be connected to computer 720 over a communication network connected via communications interfaces 750.

User output devices 730 include all possible types of devices and mechanisms for outputting information from computer 720. These may include a display (e.g., monitor 710), non-visual displays such as audio output devices, etc.

Communications interface 750 provides an interface to other communication networks and devices. Communications interface 750 may serve as an interface for receiving data from and transmitting data to other systems. Embodiments of communications interface 750 typically include an Ethernet card, a modem (telephone, satellite, cable, ISDN), (asynchronous) digital subscriber line (DSL) unit, FireWire interface, USB interface, wireless connections like Wi-Fi and Bluetooth, and the like. For example, communications interface 750 may be coupled to a computer network, to a FireWire bus, or the like. In other embodiments, communications interfaces 750 may be physically integrated on the motherboard of computer 720, and may be a software program, such as soft DSL, or the like.

In various embodiments, computer system 700 may also include software that enables communications over a network such as the HTTP, TCP/IP, RTP/RTSP protocols, and the like.

RAM 770 and disk drive 780 are examples of tangible media configured to store data, including executable computer code, human readable code, or the like. Other types of tangible media include solid state drives, SSD, floppy disks, removable hard disks, optical storage media such as CD-ROMS, DVDs and bar codes, semiconductor memories such as flash memories, read-only-memories (ROMS), battery-backed volatile memories, networked storage devices, and the like. RAM 770 and disk drive 780 may be configured to store the basic programming and data constructs that provide the functionality of the improved modelling concept.

Software code modules and instructions that provide the functionality of the improved processing concept may be stored in RAM 770 and disk drive 780. These software modules may be executed by processor(s) 760. RAM 770 and disk drive 780 may also provide a repository for storing data used in accordance with the present invention.

RAM 770 and disk drive 780 may include a number of memories including a main random access memory (RAM) for storage of instructions and data during program execution and a read only memory (ROM) in which fixed instructions are stored. RAM 770 and disk drive 780 may include a file storage subsystem providing persistent (non-volatile) storage for program and data files. RAM 770 and disk drive 780 may also include removable storage systems, such as removable flash memory.

Bus subsystem 790 provides a mechanism for letting the various components and subsystems of computer 720 communicate with each other as intended. Although bus subsystem 790 is shown schematically as a single bus, alternative embodiments of the bus subsystem may utilize multiple busses.

Fig. 6 is representative of a computer system capable of embodying the improved processing concept. It will be readily apparent to one of ordinary skill in the art that many other hardware and software configurations are suitable for such use. For example, the computer may be a mobile device, in particular a mobile phone, or desktop, portable, rack-mounted or tablet configuration. Additionally, the computer may be a series of networked computers.

Various embodiments of the improved processing concept can be implemented in the form of logic in software or hardware or a combination of both. The logic may be stored in a computer readable or machine-readable storage medium as a set of instructions adapted to direct a processor of a computer system to perform a set of steps disclosed in embodiments of the improved processing concept. The logic may form part of a computer program product adapted to direct an information-processing device to automatically perform a set of steps disclosed in embodiments of the improved processing concept.

The specification and drawings are, accordingly, to be regarded in an illustrative rather than a restrictive sense. However, it will be evident that various modifications and changes may be made thereunto without departing from the scope of the invention as set forth in the claims.

**Claims**

1.  A computer implemented method for producing a 3-dimensional, 3D, representation of an object, the method comprising

    - storing, in a computer system, a polygonal 3D mesh having a plurality of faces, and a plurality of keyframes, each keyframe comprising an image registered on the mesh with a view- and projection-matrix;
    - selecting, in the computer system, a plurality of surface points on the plurality of faces;
    - for each selected surface point, in the computer system:

        - determining hemisphere keyframe samples by determining a color information and a direction information from each keyframe being visible from said selected surface point;
        - determining a hemisphere grid table based on the hemisphere keyframe samples; and
        - determining a spherical harmonics, SH, coefficient set based on the hemisphere grid table; and

    - generating, in the computer system, a SH texture based on the SH coefficient sets for each selected surface point such that each selected surface point is associated to one of the SH coefficient sets.

2.  The method according to the preceding claim, wherein in the step of selecting a plurality of surface points such surface points are selected that fulfill at least one of the following conditions:

    - the surface point is located on a face of the plurality of faces, all vertices of which face being visible from at least one of the keyframes;
    - the surface point is located on an enlarged version of a face of the plurality of faces, all vertices of which enlarged version being visible from at least one of the keyframes;
    - the surface point is located on a face of the plurality of faces, at least one of the vertices of which face being visible from at least one of the keyframes.

3.  The method according to one of the preceding claims, further comprising

    - eliminating, in the computer system, at least one SH coefficient set from the SH texture based on a similarity measure between the at least one SH coefficient set and at least one further SH coefficient set; and
    - re-associating, in the computer system, each surface point, which has been associated to the eliminated SH coefficient set, to the at least one further SH coefficient set.

4.  The method according to the preceding claim, wherein the step of eliminating comprises:

    - ordering the SH coefficient sets in the SH texture, in particular according to a lexicographical order of the SH coefficient sets; and

- determining the similarity measure between consecutive SH coefficient sets of the ordered SH texture.

5.  The method according to claim 3 or 4, wherein the similarity measure is determined as a sum of squared differences between coefficients of the SH coefficient sets, and wherein the at least one SH coefficient set is eliminated if the similarity measure is smaller than a predetermined threshold.

6.  The method according to one of claims 3 to 5, wherein generating the SH texture comprises determining and storing a rotation factor around a surface normal of the SH coefficient sets, and normalizing an orientation of the SH coefficient sets based on the respective determined rotation factors, and wherein the similarity measure is determined based on the normalized SH coefficient sets.

7.  The method according to one of the preceding claims, further comprising, determining, in particular before the selecting step, a visibility matrix based on the plurality of keyframes and the associated view- and projection-matrices, the visibility matrix indicating, for each of the keyframes, whether vertices of the plurality of faces are visible from said keyframe, wherein any determination of a visibility between one of the surface points and one of the keyframes is based on the visibility matrix.

8.  The method according to one of the preceding claims, wherein determining the hemisphere grid table comprises

    - storing the color information of the hemisphere keyframe samples in the hemisphere grid table at table positions that are based on the respective direction information; and
    - applying a filling algorithm to table positions that are empty based on the stored color information.

9.  The method according to the preceding claim, wherein the filling algorithm is based on at least one of the following:

    - interpolation;
    - extrapolation;
    - Delaunay triangulation.

10. The method according to one of the preceding claims, further comprising:

    - selecting additional surface points on the plurality of faces; and

- for each additional surface point, generating a respective SH coefficient set by interpolating between SH coefficient sets associated with surface points neighboring to said additional surface point on the mesh.

11. The method according to one of the preceding claims, wherein the color information is processed according to one of the following color spaces:

    - RGB;
    - RGB with an alpha channel;
    - HSV;
    - CIELAB;
    - a color space that has a separate channel for luminous intensity.

12. The method according to one of the preceding claims, further comprising compressing the SH texture by performing a Principal Component Analysis, PCA, on the SH texture.

13. The method according to one of the preceding claims, wherein, for each keyframe, the associated view- and projection-matrix defines a transformation of a 3D point, in particular on the mesh, into 2D coordinates in the image of said keyframe.

14. The method according to one of the preceding claims, further comprising, before selecting the surface points,

    - projecting the mesh onto at least one, in particular each, of the keyframes for generating a respective binary mask for said keyframe; and
    - eroding each binary mask by a predefined eroding threshold for generating a silhouette mask; wherein
    - no keyframe sample is determined for a selected surface point from a keyframe if a projection of said selected surface point onto said keyframe is outside the silhouette mask.

15. A computer program product for producing a 3-dimensional representation of an object, the computer program product comprising a non-transitory computer readable storage medium and computer program instructions stored therein enabling a computer system to execute a method according to one of the preceding claims.

# Fig 1

**top down view**

**side view**

~10°

~10°

~10°

...to 360

object

~30-40°

0°

~20-30°

object

# Fig 2

# Fig 3

S00 — generating 3D mesh

S10 — storing 3D mesh with keyframes

S15 — determining visibility matrix

S20 — selecting surface points

S30 — determining hemisphere keyframe samples

S32 — determining hemisphere grid table

S34 — determining SH coefficient set

S36 — further surface point?  yes

no

S25 — further selection criterion?  yes

no

S40 — generating SH texture

S50 — interpolating remaining surface points

S60 — compressing SH texture

# Fig 4

# Fig 5

# Fig 6

Europäisches
Patentamt

European
Patent Office

Office européen
des brevets

# EUROPEAN SEARCH REPORT

Application Number

EP 21 15 5801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/020155 A1 (DUKA DMITRY [RU] ET AL) 16 January 2020 (2020-01-16) <br> * paragraph [0005] * <br> * paragraph [0023] - paragraph [0024] * <br> * paragraph [0026] * <br> * paragraph [0028] * <br> * paragraph [0030] - paragraph [0031] * <br> * paragraph [0039] * <br> * paragraph [0055] * <br> * paragraph [0058] * <br> * paragraph [0102] - paragraph [0103] * <br> * paragraph [0114] * <br> * paragraph [0120] - paragraph [0121] * <br> * paragraph [0123] - paragraph [0125] * <br> * paragraph [0130] - paragraph [0131] * <br> * paragraph [0145] * <br> ----- | 1-6, 8-13,15 | INV. <br> G06T17/00 <br> G06T15/04 <br> G06T15/50 |
| A | KAUTZ J ET AL: "FAST, ARBITRARY BRDF SHADING FOR LOW-FREQUENCY LIGHTING USING SPHERICAL HARMONICS", RENDERING TECHNIQUES 2002. EUROGRAPHICS WORKSHOP PROCEEDINGS. PISA, ITALY, JUNE 26 - 28, 2002; [PROCEEDINGS OF THE EUROGRAPHICS WORKSHOP], NEW YORK, NY : ACM, US, vol. WORKSHOP 13, 26 June 2002 (2002-06-26), pages 291-296, XP001232401, ISBN: 978-1-58113-534-3 <br> * abstract * <br> * section 2 "previous work", subsection "spherical harmonics for shading", second paragraph, last sentence * <br> * section 4 "rendering algorithm", paragraphs 1 to 3 * <br> ----- | 1,15 | TECHNICAL FIELDS SEARCHED (IPC) <br><br> G06T |

-/--

The present search report has been drawn up for all claims

| Place of search | Date of completion of the search | Examiner |
|---|---|---|
| Berlin | 24 November 2021 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

**EP 21 15 5801**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEVOY MARC ET AL: "Light field rendering", INDUSTRIAL AND ENGINEERING APPLICATIONS OF ARTIFICIAL INTELLIGENCE AND EXPERT SYSTEMS, ACM, 2 PENN PLAZA, SUITE 701 NEW YORK NY 10121-0701 USA, 1 August 1996 (1996-08-01), pages 31-42, XP058609832, DOI: 10.1145/237170.237199 ISBN: 978-0-89791-372-0 * section 4.1 "vector quantization" * ----- | 3-6 | |
| A | DANIEL N WOOD ET AL: "Surface light fields for 3D photography", COMPUTER GRAPHICS. SIGGRAPH 2000 CONFERENCE PROCEEDINGS. NEW ORLEANS, LA, JULY 23 - 28, 2000; [COMPUTER GRAPHICS PROCEEDINGS. SIGGRAPH], NEW YORK, NY : ACM, US, 1 July 2000 (2000-07-01), pages 287-296, XP058374788, DOI: 10.1145/344779.344925 ISBN: 978-1-58113-208-3 * section 1.1 "related work", paragraphs 1 and 2 * * section 1.1 "related work", paragraph 5 * * section 4.3 "compression overview" * * section 4.4 "median remocal and reflection" * * section 4.5 "function quantization" * * section 4.6 "principal function analysis" * ----- -/-- | 6,12 | TECHNICAL FIELDS SEARCHED (IPC) |

The present search report has been drawn up for all claims

| Place of search | Date of completion of the search | Examiner |
|---|---|---|
| Berlin | 24 November 2021 | Gauthier, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................................

& : member of the same patent family, corresponding
   document

EPO FORM 1503 03.82 (P04C01)

**EUROPEAN SEARCH REPORT**

Application Number

EP 21 15 5801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZDEPSKI J ET AL: "AN IMAGE VECTOR QUANTIZER USING A PERCEPTUALLY-BASED PREPROCESSOR", GLOBAL TELECOMMUNICATIONS CONFERENCE. HOUSTON, TEXAS, DEC. 1 - 4, 1986; [PROCEEDINGS OF THE GLOBAL TELECOMMUNICATIONS CONFERENCE AND EXHIBITION (GLOBECOM)], NEW YORK, IEEE, US, vol. 1 - 02 - 03, 1 December 1986 (1986-12-01), pages 1150-1157, XP000371998, * asbtract * * section "vector quantizer principles", first sentence * * page 1151, left-hand column, second paragraph, line 20 to last ("the second source of bias...") * ----- | 3-6 | |
| A | PAVEL KRAJCEVSKI ET AL: "GST", ACM TRANSACTIONS ON GRAPHICS, ACM, NY, US, vol. 35, no. 6, 11 November 2016 (2016-11-11), pages 1-10, XP058306401, ISSN: 0730-0301, DOI: 10.1145/2980179.2982439 * the whole document * ----- | 3-6 | TECHNICAL FIELDS SEARCHED (IPC) |

The present search report has been drawn up for all claims

| Place of search | Date of completion of the search | Examiner |
|---|---|---|
| Berlin | 24 November 2021 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

Europäisches
Patentamt

European
Patent Office

Office européen
des brevets

**Application Number**

**EP 21 15 5801**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-6, 8-13, 15**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 21 15 5801

The Search Division considers that the present European patent application does not comply with the requirements of unity of invention and relates to several inventions or groups of inventions, namely:

    **1. claims: 1-6, 8-13, 15**

        **reduction of the data space occupied by the spherical harmonics texture**

           ---

    **2. claim: 7**

        **computationally efficient determination of a mesh polygon visibility**

           ---

    **3. claim: 14**

        **robust determination of visible keyframes**

           ---

# EP 4 040 397 A1

## ANNEX TO THE EUROPEAN SEARCH REPORT
## ON EUROPEAN PATENT APPLICATION NO.

EP 21 15 5801

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2021

| Patent document cited in search report | Publication date | Patent family member(s) | Publication date |
|---|---|---|---|
| US 2020020155 A1 | 16-01-2020 | CN 110728740 A | 24-01-2020 |
| | | DE 102019118838 A1 | 16-01-2020 |
| | | US 2020020155 A1 | 16-01-2020 |
| | | US 2021201576 A1 | 01-07-2021 |

EPO FORM P0459

For more details about this annex : see Official Journal of the European Patent Office, No. 12/82